# EUROPÄISCHE PATENTANMELDUNG

(11) **EP 1 624 240 A1**
(43) Veröffentlichungstag der Anmeldung: **08.02.2006**
(21) Anmeldenummer: 05017124.8
(22) Anmeldetag: 05.08.2005
(51) Int. Cl.: F16L 5/04, F16L 5/14, F16L 57/04, F16L 9/147, H02G 3/22

(54) **Doppelwandiges Verbundrohr und Brandschutzformteil dafür**

(30) Priorität: 07.08.2004 DE 102004038479
(71) Anmelder: ACO Stavebni prvky k.s., 58222 Pribyslav (CZ)
(72) Erfinder: Betz, Heinrich, 72810 Gomaringen-Stockach (DE); Fromm, Heinrich, 72355 Schörzingen (DE); Schulte, Günter, 59757 Arnsberg (DE)
(74) Vertreter: Bohnenberger, Johannes

(57) **Zusammenfassung**

Bei einem doppelwandigen Verbundrohr (2) mit einem Innenrohr (3) und einem Außenrohr (4) ist das Außenrohr (4) auf einer axialen Länge (L) des Verbundrohres (2) unterbrochen und das Innenrohr (3) innerhalb dieser axialen Länge (L) mit einem zumindest im Brandfall rauchgasundurchlässigen Material (10) ummantelt.

## Beschreibung

Die vorliegende Erfindung betrifft ein Verbundrohr mit einem Innenrohr und einem Außenrohr sowie ein Brandschutzformteil dafür.

Verbundrohre mit einer zwischen Innen- und Außenrohr eingebrachten Wärmedämmung werden insbesondere als wärmeisolierte Wasserrohre eingesetzt, da eine bauseitige Wärmedämmung eingespart werden kann. Außerdem befindet sich die Muffe am Innenrohr, wodurch Verbundrohre optisch perfekt integriert werden können. Die im Verbundrohr eingebrachte Wärmedämmung ist allerdings aus Schaumstoff, der im Brandfall, d. h. bei Hitze, schmilzt.

Wenn ein solches Verbundrohr durch eine Decken- oder Wandöffnung geführt wird, also Brandabschnitte überbrückt, muss die Fuge zwischen Öffnungslaibung und Verbundrohr von unten und von oben, d. h. vom unteren und oberen Stockwerk her, mit Mineralfasermaterial (Schmelzpunkt >1000 °C) abgedichtet oder mit Mörtel vergossen werden, um im Brandfall das Übergreifen von Feuer und Rauch auf das obere Stockwerk zu verhindern. Allerdings bleibt das Mineralfasermaterial sichtbar oder muss aufwändig verkleidet werden, was unerwünscht ist. Auch kann sich Rauch, wenn die Wärmedämmung des Verbundrohrs im Brandfall geschmolzen ist, zwischen Innen- und Außenrohr in den nächsten Brandabschnitt ausbreiten.

Demgegenüber ist es die Aufgabe der vorliegenden Erfindung, ein doppelwandiges Verbundrohr der eingangs genannten Art dahingehend weiterzubilden, dass es für einen Betrachter unsichtbar in einer Decken- oder Wandöffnung rauchgasundurchlässig abgedichtet ist.

Diese Aufgabe wird erfindungsgemäß dadurch gelöst, dass das Außenrohr auf einer axialen Länge des Verbundrohres unterbrochen ist und das Innenrohr innerhalb dieser axialen Länge mit einem zumindest im Brandfall rauchgasundurchlässigen (rauchgasdichten) Material ummantelt ist. Bevorzugt ist das Innenrohr auf der gesamten axialen Länge, auf der das Außenrohr unterbrochen ist, mit dem rauchgasundurchlässigen Material ummantelt.

Erfindungsgemäß verhindert die rauchgasundurchlässige Ummantelung, dass sich Rauch zwischen Innen- und Außenrohr ausbreiten kann.

Besonders bevorzugt ist das rauchgasundurchlässige Material eine intumeszierende Masse. Diese intumeszierende Masse schäumt im Brandfall, d. h. bei Erwärmung, auf und dichtet so das Innenrohr in einer Decken- oder Wandöffnung sowohl rauchgasdicht als auch feuerdicht ab, so dass sich kein Rauch zwischen Innen- und Außenrohr und zwischen Innenrohr und Öffnungslaibung ausbreiten kann.

Vorzugsweise ist im Ringraum zwischen Innen- und Außenrohr ein Dämmmaterial vorgesehen. Wenn das Dämmmaterial im Brandfall rauchgasdurchlässig ist oder wird, z. B. weil es schmilzt oder brennt, wird der dann für Rauchgas durchlässige Ringraum zwischen Innen- und Außenrohr durch die aufschäumende intumeszierende Ummantelung in der Decken- oder Wandöffnung abgedichtet.

Der Außendurchmesser des rauchgasundurchlässigen Materials entspricht bevorzugt mindestens dem Innendurchmesser des Außenrohrs, besonders bevorzugt jedoch dem Außendurchmesser des Außenrohrs, sodass die intumeszierende Ummantelung bündig zum Außenrohr ist.

Bei besonders vorteilhaften Ausführungsformen der Erfindung ist das Verbundrohr mehrstückig ausgebildet und auf dem axialen Abschnitt, auf dem das Außenrohr unterbrochen ist, durch ein Innenrohrstück gebildet, das mit dem rauchgasundurchlässigen Material ummantelt ist. Die Erfindung betrifft auch ein solches Brandschutzformteil mit einem Innenrohrstück, das mit der intumeszierenden Masse ummantelt ist.

Das Innenrohrstück ist bevorzugt mit den Innenrohren der benachbarten Verbundrohrstücke über Muffenverbindungen verbunden und durch Dichtungen abgedichtet.

Weiterhin bevorzugt sind das Außenrohr und das rauchgasundurchlässige Material mit einer Körperschalldämmung ummantelt, insbesondere von einem gemeinsamen Schallschutzschlauch überzogen.

Die Erfindung betrifft auch eine Durchführung des wie oben ausgebildeten Verbundrohrs durch eine Decken- oder Wandöffnung, wobei das rauchgasundurchlässige Material innerhalb der Decken- oder Wandöffnung angeordnet ist.

Vorzugsweise ist die axiale Länge, auf der das Außenrohr unterbrochen ist, kleiner als die Decken- oder Wanddicke. Die Decken- oder Wandöffnung wird in der Regel bauseitig mit einer Schalldämmung ausgekleidet.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Deckendurchführung des erfindungsgemäßen Verbundrohres in einem Längsschnitt;
- Fig. 2: eine Detailansicht des erfindungsgemäßen Verbundrohres gemäß II in Fig. 1; und
- Fig. 3: ein zweites Ausführungsbeispiel des erfindungsgemäßen Verbundrohres in einer Darstellung analog zu Fig. 1.

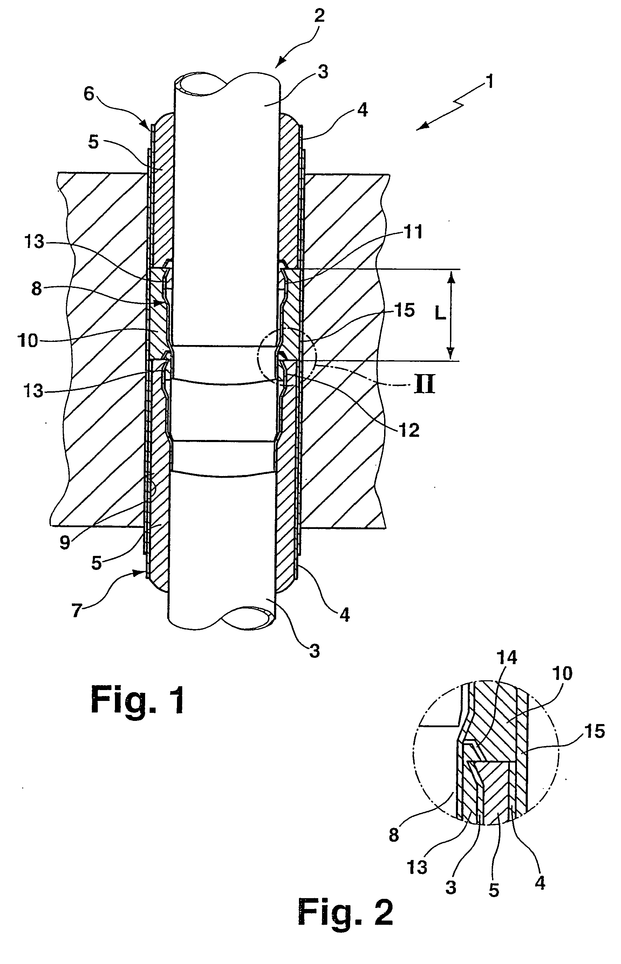

**Fig. 1** zeigt eine Deckendurchführung **1** eines Verbundrohres **2,** das durch ein Innenrohr **3,** ein Außenrohr (Außenstahlmantel) **4** und ein dazwischen liegendes, unter Wärmeeinfluss schmelzendes Wärmedämmmaterial (z. B. Schaumstoff) **5** gebildet ist.

Das Verbundrohr 3 weist ein oberes und ein unteres Verbundrohrstück **6**, **7** sowie axial dazwischen ein Innenrohrstück **8** auf, welches innerhalb der Deckenöffnung **9** angeordnet ist. Das Innenrohrstück 8 ist mit einer Ummantelung **10** aus intumeszierendem Material umgeben, deren Außendurchmesser dem Außendurchmesser des Außenrohres 4 entspricht. Das intumeszierende Material schäumt im Brandfall, d. h. bei Erwärmung, auf und ist sowohl rauchgasdicht als auch feuerdicht. Durch das Innenrohrstück 8 ist das Außenrohr 4 auf einer axialen Länge **L** unterbrochen, die kleiner als die Dicke der Decke ist. Das Innenrohrstück 8 mit seiner intumeszierenden Ummantelung 10 bildet ein Brandschutzformteil.

Das Innenrohrstück 8 weist oben eine Muffe **11** auf, in die das Innenrohr 3 des oberen Verbundrohrstücks 6 gesteckt ist. Entsprechend weist das Innenrohr 3 des unteren Verbundrohrstücks 7 oben eine Muffe **12** auf, in die das Innenrohrstück 8 gesteckt ist. Wie **Fig. 2** zeigt, weist die Muffe 12 eine Ringdichtung **13** auf, an der das Innenrohrstück 8 anliegt. Außerdem weist die intumeszierende Ummantelung 10 unten eine ringförmige Aussparung **14** auf, in die ein Vorsprung der Ringdichtung 13 eingreift. Die Muffe 11 ist analog ausgebildet, wobei hier das Wärmedämmmaterial 5 unten eine Aussparung aufweist, in die ein Vorsprung der Ringdichtung eingreift. Das gesamte Verbundrohr 2 ist mit einer Körperschalldämmung ummantelt, im gezeigten Ausführungsbeispiel von einem Schallschutzschlauch 15 überzogen.

Das mit dem Schallschutzschlauch 15 überzogene Verbundrohr 2 wird in der bauseitig mit einer Schalldämmung (nicht gezeigt) ausgekleideten Deckenöffnung 9 derart positioniert, dass sich das Innenrohrstück 8 bzw. die intumeszierende Ummantelung 10 vollständig innerhalb der Decke befindet.

Wenn bei einem Brand im unteren Stockwerk das Wärmedämmmaterial 5 durch die Hitze schmilzt, schäumt durch die Hitze die intumeszierende Ummantelung 10 auf und drückt den nichtbrennbaren Schallschutzschlauch 15 gegen die Laibung der Deckenöffnung 9. Durch die intumeszierende Ummantelung 10 ist das Innenrohr 3 in der Deckenöffnung 9 rauchgasundurchlässig und feuerdicht abgedichtet, sodass kein Rauch vom unteren Stockwerk zwischen Innen- und Außenrohr 3, 4 und zwischen dem Innenrohr 3 und der Öffnungslaibung in das obere Stockwerk gelangen kann.

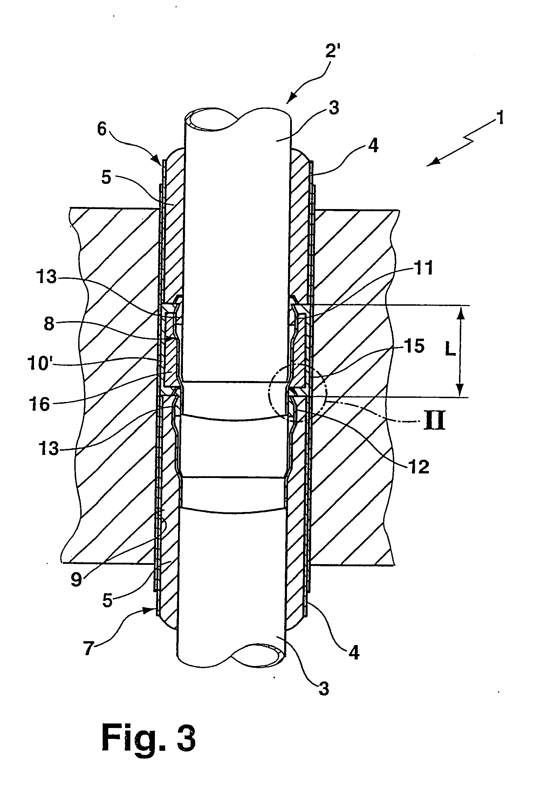

Vom Verbundrohr 2 unterscheidet sich das in **Fig. 3** gezeigte Verbundrohr **2'** allein dadurch, dass die Ummantelung des Innenrohrs 8 nicht aus intumeszierendem Vollmaterial gebildet ist, sondern dass die intumeszierende Ummantelung **10'** einen Füllkörper **16** aus mineralfaserverstärktem Baustoff außen vollständig umschließt. Durch einen preisgünstigen Füllkörper 16 kann die Menge an teuerem intumeszierendem Material verringert werden, und die Kosten des Brandschutzformteils können im Vergleich zu dem in Fig.1 gezeigten Brandschutzformteil gesenkt werden.

## Patentansprüche

1. Verbundrohr (2; 2') mit einem Innenrohr (3) und einem Außenrohr (4),
**dadurch gekennzeichnet,**
**dass** das Außenrohr (4) auf einer axialen Länge (L) des Verbundrohres (2; 2') unterbrochen ist und das Innenrohr (3) innerhalb dieser axialen Länge (L) mit einem zumindest im Brandfall rauchgasundurchlässigen Material (10; 10') ummantelt ist.

2. Verbundrohr nach Anspruch 1, **dadurch gekennzeichnet, dass** das Innenrohr (3) auf der gesamten axialen Länge (L), auf der das Außenrohr (4) unterbrochen ist, mit dem rauchgasundurchlässigen Material (10; 10') ummantelt ist.

3. Verbundrohr nach Anspruch 1 oder 2, **dadurch gekennzeichnet, dass** das rauchgasundurchlässige Material (10; 10') eine intumeszierende Masse ist.

4. Verbundrohr nach einem der vorhergehenden Ansprüche, **dadurch gekennzeichnet, dass** im Ringraum zwischen Innen- und Außenrohr (3, 4) ein Dämmmaterial (5) vorgesehen ist.

5. Verbundrohr nach einem der vorhergehenden Ansprüche, **dadurch gekennzeichnet, dass** der Außendurchmesser des rauchgasundurchlässigen Materials (10; 10') mindestens dem Innendurchmesser des Außenrohrs (4), vorzugsweise dem Außendurchmesser des Außenrohrs (4), entspricht.

6. Verbundrohr nach einem der vorhergehenden Ansprüche, **dadurch gekennzeichnet, dass** das Verbundrohr (2; 2') mehrstückig ausgebildet und auf dem axialen Abschnitt (L), auf dem das Außenrohr (4) unterbrochen ist, durch ein Innenrohrstück (8) gebildet ist, das mit dem rauchgasundurchlässigen Material (10; 10') ummantelt ist.

7. Verbundrohr nach Anspruch 6, **dadurch gekennzeichnet, dass** das Innenrohrstück (8) mit den Innenrohren (3) der benachbarten Verbundrohrstücke (6, 7) über Muffenverbindungen (11, 12) verbunden ist.

8. Verbundrohr nach Anspruch 6 oder 7, **dadurch gekennzeichnet, dass** zwischen dem Innenrohrstück (8) und den Innenrohren (3) der benachbarten Innenrohrstücke (6, 7) jeweils eine Dichtung (12) vorgesehen ist.

9. Verbundrohr nach einem der vorhergehenden Ansprüche, **dadurch gekennzeichnet, dass** das Außenrohr (4) und das rauchgasundurchlässige Material (10) mit einer Körperschalldämmung ummantelt sind, insbesondere von einem Schallschutzschlauch (15) überzogen sind.

10. Verbundrohr nach einem der vorhergehenden Ansprüche, **dadurch gekennzeichnet, dass** das rauchgasundurchlässige Material (10) einen Füllkörper (16) aus anderem Material, insbesondere aus mineralfaserverstärktem Baustoff, vollständig umschließt.

11. Brandschutzformteil, insbesondere für ein doppelwandiges Verbundrohr (2; 2') nach einem der vorhergehenden Ansprüche, **gekennzeichnet durch** ein Innenrohrstück (8), das mit einer rauchgasundurchlässigen, vorzugsweise intumeszierenden, Masse (10; 10') ummantelt ist.

12. Brandschutzformteil nach Anspruch 11, **dadurch gekennzeichnet, dass** die intumeszierende Masse (10') einen Füllkörper (16) aus anderem Material, insbesondere aus mineralfaserverstärktem Baustoff, vollständig umschließt.

13. Durchführung (1) des nach einem der Ansprüche 1 bis 10 gebildeten Verbundrohrs (2; 2') durch eine Decken- oder Wandöffnung (9), wobei das rauchgasundurchlässige Material (10; 10') innerhalb der Decken- oder Wandöffnung (9) angeordnet ist.

14. Durchführung nach Anspruch 13, **dadurch gekennzeichnet, dass** die axiale Länge (L), auf der das Außenrohr (4) unterbrochen ist, kleiner als die Decken- oder Wanddicke ist.

15. Durchführung nach Anspruch 13 oder 14, **dadurch gekennzeichnet, dass** die Decken- oder Wandöffnung (9) mit einer Schalldämmung ausgekleidet ist.
